# EUROPÄISCHE PATENTANMELDUNG

(11) **EP 4 696 410 A1**
(43) Veröffentlichungstag der Anmeldung: **18.02.2026**
(21) Anmeldenummer: 25193734.8
(22) Anmeldetag: 04.08.2025
(51) Int. Cl.: B01J 20/18, B01D 53/02, B01J 20/26, B01J 20/28, B01J 20/30

(54) **VERFAHREN ZUR HERSTELLUNG VON POLYTETRAFLUOROETHYLEN-BESCHICHTETEN ADSORPTIONSMATERIALIEN, ADSORPTIONSMATERIALIEN SOWIE DEREN VERWENDUNG ZUR ADSORPTION VON KOHLENDIOXID**

(30) Priorität: 14.08.2024 DE 102024123191
(71) Anmelder: VOLKSWAGEN AG, 38440 Wolfsburg (DE)
(72) Erfinder: Abdel-Mageed, Ali M., 18106 Rostock (DE); Wotzka, Alexander, 18057 Rostock (DE); Stöhr, Marion, 12524 Berlin (DE); Wohlrab, Sebastian, 18311 Ribnitz-Damgarten (DE); Simon, Nadine, 38442 Wolfsburg (DE); Block, Gerald, 38165 Lehre (DE); Grote, Andreas, 38176 Wendeburg (DE); Christine, Schütz, 38533 Vordorf (OT Rethen) (DE)
(74) Vertreter: MFG Patentanwälte Meyer-Wildhagen Meggle-Freund Gerhard PartG mbB

(57) **Zusammenfassung**

Hierin beschrieben wird ein Verfahren zur Herstellung von Polytetrafluorethylen-(PTFE)-beschichteten Adsorptionsmaterialien, wobei das Verfahren die Schritte umfasst:

- Bereitstellen einer Suspension von PTFE in Wasser,

- Bereitstellen von Zeolith, mischen der Suspension von PTFE mit dem Zeolithen zu einer Dispersion,

- Trocknen der Dispersion, um ein PTFE beschichtetes Adsorptionsmaterial zu erhalten, wobei das PTFE in der Suspension in einem Bereich von 1 bis 20 Gew.% vorliegt, bezogen auf das Gewicht der Suspension.

Ferner werden ein Polytetrafluorethylen-(PTFE)-beschichteten Adsorptionsmaterial, die Verwendung des Adsorptionsmaterials in eienm DIrect Air Capture Verfahren, sowie ein Verfahren zur Gewinnung von Kohlendioxid beschrieben.

## Beschreibung

Die Erfindung betrifft ein Verfahren zur Herstellung von Polytetrafluorethylen-(PTFE)-beschichteten Adsorptionsmaterialien, PTFE-beschichtetes Adsorptionsmaterial, die Verwendung des Adsorptionsmaterials sowie ein Verfahren zur Gewinnung von Kohlendioxid.

Die Gewinnung von Kohlendioxid aus Kohlendioxid-haltigen Quellen, wie Atmosphärenluft, nimmt stetig an Bedeutung zu. Insbesondere durch Verfahren, wie das "Direct-Air-Capture" (DAC) Verfahren können CO₂-Bilanzen von Verfahren verbessert werden und CO₂-Gehalte von z. B. Abluft oder Atmosphärenluft gesenkt werden. Hierzu werden in der Regel Adsorptionsmaterialien benötigt, die selektiv ein bestimmtes Gas, wie Kohlendioxid, aufnehmen, dieses wieder abgeben können und zudem robust sind.

Bekannte Adsorptionsmaterialien sind beispielsweise Zeolithe, wie das 13X-Zeolith.

Zeolithe, wie das 13X, sind zwar robust, leiden aber häufig an einer unzureichenden CO₂:H₂O-Selektivität. Dadurch ist immer ein energieintensiver und kostentreibender Vortrocknungsschritt der Luft notwendig. Auch bei einer Vortrocknung der Adsorptionsluft wird immer noch so viel Wasser im Zeolithen gebunden, dass es in der anschließenden Desorption energieintensiv wieder ausgetrieben werden muss, um die CO₂-Aufnahme-Kapazität zu erhalten.

Um die CO₂:H₂O-Selektivität von Zeolith-Adsorptionsmaterialien zu verbessern, kann eine Beschichtung mit instabilen organischen Verbindungen (z. B. durch Silanisierung) aufgebracht werden. Leider sind diese Schichten häufig nicht sehr stabil, so dass die CO₂:H₂O Selektivität über die Zyklen abnimmt. Eine Beschichtung mit einem Polymer im Vergleich zur Silanisierung ist oft günstiger und stabiler.

WO9602322 A1, EP2532421 A1 und EP0659469 A2 offenbaren u. a. Zeolith-Materialien, die als Adsorptionsmittel eingesetzt werden können.

Aufgabe der vorliegenden Erfindung ist es, ein Verfahren zur Herstellung von Polytetrafluorethylen-(PTFE)-beschichteten Adsorptionsmaterialien, ein Polytetrafluorethylen-(PTFE)-beschichtetes Adsorptionsmaterial, die Verwendung des Adsorptionsmaterials sowie ein Verfahren zur Gewinnung von Kohlendioxid bereitzustellen, das bzw. die die oben genannten Nachteile wenigstens teilweise überwindet.

Diese Aufgabe wird durch das erfindungsgemäße Verfahren nach Anspruch 1, das Polytetrafluorethylen-(PTFE)-beschichtete Adsorptionsmaterial nach Anspruch 7, die Verwendung nach Anspruch 19 sowie das Verfahren nach Anspruch 13 gelöst.

Weitere vorteilhafte Ausgestaltungen der Erfindung ergeben sich aus den Unteransprüchen und der folgenden Beschreibung bevorzugter Ausführungsbeispiele der vorliegenden Erfindung.

Ein erfindungsgemäßes Verfahren zur Herstellung von Polytetrafluorethylen-(PTFE)-beschichteten Adsorptionsmaterialien, umfasst die Schritte:
- bereitstellen einer Suspension von PTFE in Wasser,
- bereitstellen von Zeolith,
- mischen der Suspension von PTFE mit dem Zeolithen zu einer Dispersion,
- trocknen der Dispersion, um ein PTFE-beschichtetes Adsorptionsmaterial zu erhalten, wobei das PTFE in der Suspension in einem Bereich von 1 bis 20 Gew.% vorliegt, bezogen auf das Gewicht der Suspension.

Ein erfindungsgemäßes Verfahren umfasst den Schritt des Bereitstellens einer Suspension von PTFE in Wasser, wobei das PTFE in der Suspension in einem Bereich von 1 bis 20 Gew.% vorliegt, bezogen auf das Gewicht der Suspension. Zur Herstellung der Suspension kann die gewünschte Menge PTFE vorgelegt werden und mit Wasser gemischt werden. Vorzugsweise handelt es sich bei dem Wasser um destilliertes Wasser. Das Wasser kann eine Temperatur im Bereich von 10 bis 30°C, vorzugsweise im Bereich von 18 bis 25°C, noch weiter bevorzugt von 20°C aufweisen.

In einem weiteren Schritt eines erfindungsgemäßen Verfahrens wird ein Zeolith bereitgestellt. Bei dem Zeolithen handelt es sich vorzugsweise um das Trägermaterial für die PTFE-Beschichtung. Der Zeolith kann in Form von Partikeln, wie z. B. in einem Pulver, vorliegen. Der Zeolith wird vorzugsweise vor der Verwendung in dem erfindungsgemäßen Verfahren getrocknet, um so Stoffe wie Wasser, Kohlendioxid, oder weitere Verunreinigungen zu entfernen. Das Trocknen kann durch Erwärmen, z. B. bei Temperaturn von mindestens 150°C, durchgeführt werden. Alternativ kann das Trocknen durch eine Kombination von Vakuum und Erwärmen stattfinden. Beispielsweise kann der Zeolith in einem Vakuum-Trockenschrank getrocknet werden. Der Vakuum-Trockenschrank kann eine Temperatur im Bereich von 150°C bis 300°C, vorzugsweise im Bereich von 180°C bis 250°C, noch weiter bevorzugt im Bereich von 200°C bis 220°C aufweisen. Im Vakuum-Trockenschrank kann ein Druck im Bereich von 700 bis 0,1 mbar, bevorzugt im Bereich von 20 bis 0,1 mbar, noch weiter bevorzugt im Bereich von 1 bis 0,1 mbar herrschen. In der Regel wird das Verfahren energieintensiver, je niedriger der Druckbereich ist.

Das Trocknen kann in einen Zeitraum im Bereich von 2h bis 20h, vorzugsweise im Bereich von 5h bis 15h, noch weiter bevorzugt im Bereich von 8h bis 12h, stattfinden.

In einem weiteren Schritt wird der Zeolith mit der PTFE-Suspension gemischt und so eine Dispersion hergestellt. Dadurch kann der Zeolith mit PTFE imprägniert werden. Das Mischen kann durch Rühren des Zeolithen in der PTFE-Suspension stattfinden. Vorzugsweise findet das Rühren für einen bestimmten Zeitraum statt. Beispielsweise kann für 30min bis 5h, vorzugsweise für 1h bis 3h, noch weiter bevorzugt für 2h bis 2,5h gerührt werden.

Der Zeolith und die PTFE-Suspension werden vorzugsweise in einem bestimmten Verhältnis miteinander gemischt. Vorzugsweise ist das Verhältnis von Zeolith zu PTFE im Bereich von 49:1 bis 2,33: 1, vorzugsweise im Bereich von 4.5:1, bezogen auf das Gesamtgewicht von Zeolith und PTFE.

In einem weiteren Schritt des erfindungsgemäßen Verfahrens wird die Dispersion getrocknet, um ein PTFE-beschichtetes Adsorptionsmaterial zu erhalten. Das Trocknen kann bei Raumtemperatur, oder bei weiteren geeigneten Temperaturen stattfinden. Es ist auch denkbar, dass das Trocknen über einen Temperaturgradienten mit vorzugsweise ansteigenden Temperaturen stattfindet. Beispielsweise kann für eine gewisse Zeit zunächst bei Raumtemperatur getrocknet werden und anschließend für eine gewisse Zeit bei erhöhten Temperaturen. Bei den erhöhten Temperaturen kann es sich um Temperaturen im Bereich von 20°C bis 180°C, vorzugsweise um Temperaturen im Bereich von 80°C bis 150°C, noch weiter bevorzugt im Bereich von 100°C bis 130°C, handeln.

Es kann so mit PTFE beschichteter Zeolith hergestellt werden, sogenannte Primärpartikel, die eine Größe im Bereich von 2 bis 20 Mikrometer, vorzugsweise von 4 bis 15 Mikrometer, noch weiter bevorzugt von 10 bis 15 Mikrometer aufweisen.

In einer Ausführungsform liegt das PTFE in der Suspension in einem Bereich von 5 bis 10 Gew.% vor, bezogen auf das Gewicht der Suspension.

Das PTFE kann in der Suspension auch in weiteren Gewichtsbereichen vorliegen. So ist es denkbar, dass das PTFE in der Suspension in einem Bereich von 6 bis 9 Gew.% vorliegt, bezogen auf das Gewicht der Suspension. Das PTFE kann in der Suspension auch in einer Menge von 7 Gew.%, 8 Gew.% oder 9 Gew.%, bezogen auf das Gewicht der Suspension, vorliegen.

In einer Ausführungsform ist der Zeolith ausgewählt aus der Gruppe bestehend aus 13X Zeolith, H-ZSM-5 und 5 A. Vorzugsweise handelt es sich bei dem Zeolithen um Zeolith 13X.

Der Zeolith kann in verschiedenen Ausführungsformen vorliegen. So kann der Zeolith als Pulver, als Kugel, als Schrotkorn, oder als Pellet mit verschiedenen Formierungen (z. B. Rechteck, Würfel) vorliegen. Vorzugsweise liegt der Zeolith als Pulver vor.

In einer Ausführungsform umfasst ein erfindungsgemäßes Verfahren ferner den Schritt des Verpressen des PTFE-beschichteten Adsorptionsmaterials. Bei dem Verpressen kann es sich um ein Umformen mittels Druck und gegebenenfalls Temperatur des PTFE-beschichteten Adsorptionsmaterials handeln. Durch das Verpressen kann das PTFE-beschichtete Adsorptionsmaterial in verschiedensten Formen vorliegen. Das PTFE-beschichtete Adsorptionsmaterial kann z. B. als Granulat, als Kugel, als zylindrische Formen in beliebigen Größen (z. B von 1 bis 5 mm) vorliegen.

Bevorzugt liegt das erfindungsgemäße Adsorptionsmaterial in Kugelform vor. Durch eine kugelförmige Ausführung (Durchmesser z. B. 2mm) kann eine gleichmäßige Verteilung innerhalb der Schüttung und ein gleichmäßiger akzeptabler Strömungswiderstand bei Adsorptionsanwendungen erreicht werden.

Ein weiterer Gegenstand der vorliegenden Erfindung ist ein Polytetrafluorethylen-(PTFE)-beschichtetes Adsorptionsmaterial hergestellt nach einem erfindungsgemäßen Verfahren.

In einer Ausführungsform liegt das PTFE bei einem Polytetrafluorethylen-(PTFE)-beschichteten Adsorptionsmaterial in einem Bereich von 1 bis 30 Gew%, bezogen auf das Gesamtgewicht des Polytetrafluorethylen-(PTFE)-beschichteten Adsorptionsmaterials, vor. Das PTFE kann auch in einem Bereich von 15 bis 25 Gew.%, vorzugsweise im Bereich von 7 bis 12 Gew%, weiter bevorzugt im Bereich von 15 bis 20 Gew.%, bezogen auf das Gesamtgewicht des Polytetrafluorethylen-(PTFE)-beschichteten Adsorptionsmaterials, vorliegen.

Die Menge an PTFE kann durch den Gehalt an PTFE in der PTFE-Suspension in einem erfindungsgemäßen Verfahren gesteuert werden.

Der Zeolith kann in dem Polytetrafluorethylen-(PTFE)-beschichteten Adsorptionsmaterial einen Durchmesser im Bereich von 2 bis 8 mm haben. Vorzugsweise kann der Zeolith einen Durchmesser im Bereich von 3 bis 6 mm, weiter bevorzugt im Bereich von 3 bis 4 mm haben.

Durch die Beschichtung des Zeolithen mit PTFE kann durch ein erfindungsgemäßes Adsorptionsmaterial eine verbesserte CO₂:H₂O-Selektivität erreicht werden bei gleichzeitig geringerer Wasseraufnahme. Daraus resultiert ein geringerer Energiebedarf für die Desorption des adsorbierten Stoffes sowie geringerer Vortrocknungsbedarf der Adsorptionsluft. Zudem weist ein erfindungsgemäßes Adsorptionsmaterial eine hohe Robustheit auf.

Bei der Verwendung von erfindungsgemäßen Adsorptionsmaterialien kann eine Abnahme der Wasseradsorptionskapazität um das ca. 4- bis 6-fache im Druckbereich von ca. 0,05 bis 0,02 kPa vorliegen, während die Adsorptionskapazität für CO₂ im gleichen Bereich vorzugsweise nahezu unverändert bleibt.

Vorzugsweise liegt somit eine relative Steigerung der CO₂:H₂O-Selektivität um das 4- bis 6-fache vor.

Ferner ist Gegenstand der vorliegenden Erfindung die Verwendung eines Polytetrafluorethylen-(PTFE)-beschichteten Adsorptionsmaterials gemäß der vorliegenden Erfindung zur Adsorption von Kohlendioxid.

Das Kohlendioxid kann vorzugsweise aus einem Gasgemisch adsorbiert werden. Bei dem Gasgemisch kann es sich zum Atmosphärenluft, Abgas, oder Haushaltsemissionen handeln. Vorzugsweise handelt es sich bei dem Gasgemisch um Atmosphärenluft.

In einer Ausführungsform kann das Polytetrafluorethylen-(PTFE)-beschichtete Adsorptionsmaterial gemäß der vorliegenden Erfindung in einem Direct Air Capture (DAC) Verfahren verwendet werden.

Ein erfindungsgemäßes Adsorptionsmaterial mit einer PTFE-Beschichtung kann die Adsorptionskapazität des Zeolithen für Wasser im relevanten Arbeitsdruckbereich bei DAC-Anwendungen einschränken, während gleichzeitig die Fähigkeit zur CO₂-Adsorption nicht wesentlich beeinträchtigt wird. Dies sollte insgesamt zu einer verbesserten Selektivität bei der CO₂-Adsorption in Gegenwart von Feuchtigkeit führen, was wiederum sehr wichtig für die technische Verwendung der DAC-Technologien für die Eindämmung der CO₂-Emissionen ist.

Das Polytetrafluorethylen-(PTFE)-beschichtete Adsorptionsmaterial gemäß der vorliegenden Erfindung kann auch zur Adsorption von CO₂ in der chemischen Industrie, in der Erdölindustrie, bzw. bei Emittenten von CO₂ verwendet werden. Bei den Emittenten von CO₂ kann es sich um Aluhütten, Zementwerke, Kraftwerke, etc. handeln.

Weiterhin ist Gegenstand der vorliegenden Erfindung ein Verfahren zur Gewinnung von Kohlendioxid, das Verfahren umfassend die Schritte:
- bereitstellen eines Polytetrafluorethylen-(PTFE)-beschichteten Adsorptionsmaterials gemäß der vorliegenden Erfindung,
- in Kontakt bringen einer CO₂-haltigen Gasmischung mit dem Polytetrafluorethylen-(PTFE)-beschichteten Adsorptionsmaterial zur Adsorption von CO₂ in dem Polytetrafluorethylen-(PTFE)-beschichteten Adsorptionsmaterial.

Bei der Gasmischung umfassend CO₂ kann es sich um Atmosphärenluft, Abgase, oder Haushaltsemissionen handeln. Vorzugsweise handelt es sich bei der Gasmischung um Atmosphärenluft.

Insbesondere kann durch das Polytetrafluorethylen-(PTFE)-beschichtete Adsorptionsmaterial das CO₂ besonders selektiv gewonnen werden. Insbesondere kann das CO₂ besonders selektiv bei Vorhandensein von Wasser in der Gasmischung gewonnen werden.

Ein erfindungsgemäßes Verfahren zur Gewinnung von CO₂ kann ferner den Schritt umfassen:
- erwärmen des CO₂ adsorbierten Polytetrafluorethylen-(PTFE)-beschichteten Adsorptionsmaterials zur Freisetzung von CO₂.

Das Erwärmen kann dabei bei Temperaturen (Desorptionstemperaturen) im Bereich von 80 bis 150°C, vorzugsweise im Bereich von 80 bis 120°C, weiter bevorzugt im Bereich von 80 bis 100°C, durchgeführt werden. Im Hinblick auf die Energieeffizienz wird vorzugsweise ein Kompromiss zwischen der Dauer der Desorption und der verwendeten Temperatur geschlossen.

Ausführungsbeispiele der Erfindung werden nun beispielhaft und unter Bezugnahme auf die beigefügte Zeichnung beschrieben, in der:
Fig. 1 schematisch ein Ausführungsbeispiel eines erfindungsgemäßen Verfahrens zur Herstellung von Polytetrafluorethylen-(PTFE)-beschichteten Adsorptionsmaterialien,
Fig. 2 SEM/EDX Darstellung von Zeolith (13X) Kugeln bedeckt mit 8,7 Gew.% PTFE,
Fig. 3 EDX-Analyse von Zeolith (13X) Kugeln bedeckt mit 8,7 Gew.% PTFE,
Fig. 4 Thermogravimetrische Analyse (TGA) und Differential-Scanning-Kalorimetrie (DSC) von PTFE-beschichtetem Zeolith,
Fig. 5 H₂O-Adsorptions-BET-Isotherme für unmodifizierten 13 X Zeolithen im Vergleich zu PFTE-modifizierten Zeolithen (2 Gew.% PTFE),
Fig. 6 CO₂-Adsorptions-BET-Isotherme für unmodifizierten 13 X Zeolithen im Vergleich zu PFTE-modifizierten Zeolithen (2 Gew.% PTFE), und
Fig. 7 schematisch ein Ausführungsbeispiel eines erfindungsgemäßen Verfahrens zur Gewinnung von CO₂,
zeigen.

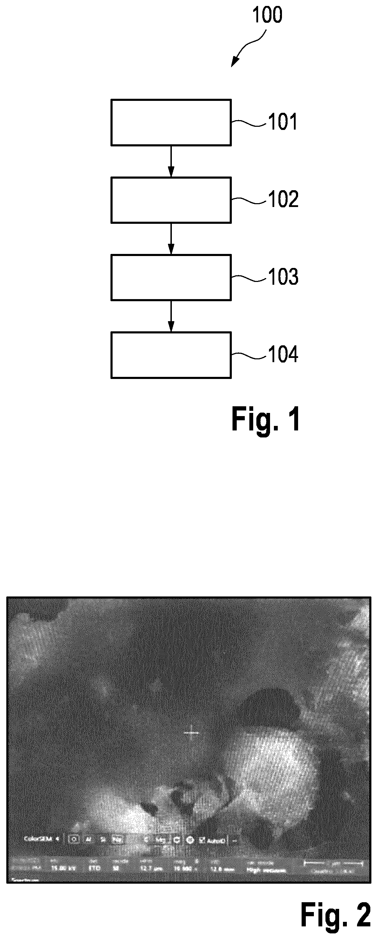

In Fig. 1 ist eine schematische Ausführungsform eines erfindungsgemäßen Verfahrens zur Herstellung von Polytetrafluorethylen-(PTFE)-beschichteten Adsorptionsmaterialien 100, umfassend die Schritte:
- bereitstellen einer Suspension von PTFE in Wasser 101,
- bereitstellen von Zeolith 102,
- mischen der Suspension von PTFE mit dem Zeolithen zu einer Dispersion 103,
- trocknen der Dispersion 104, um ein PTFE-beschichtetes Adsorptionsmaterial zu erhalten,
wobei das PTFE in der Suspension in einem Bereich von 1 bis 20 Gew.% vorliegt, bezogen auf das Gewicht der Suspension.

In Fig. 2 ist eine SEM/EDX Darstellung von Zeolith (13X) Kugeln bedeckt mit 8,7 Gew.% PTFE abgebildet. Die Bedeckung der Zeolith-Partikel mit PTFE kann von der ausgewählten Beladung des PTFE bei der Herstellung der Polytetrafluorethylen-(PTFE)-beschichteten Adsorptionsmaterialien abhängig sein. Die Bedeckung wurde durch Rasterelektronenmikroskopie (SEM) und energiedispersive Röntgenspektroskopie (EDX) Messungen bestätigt.

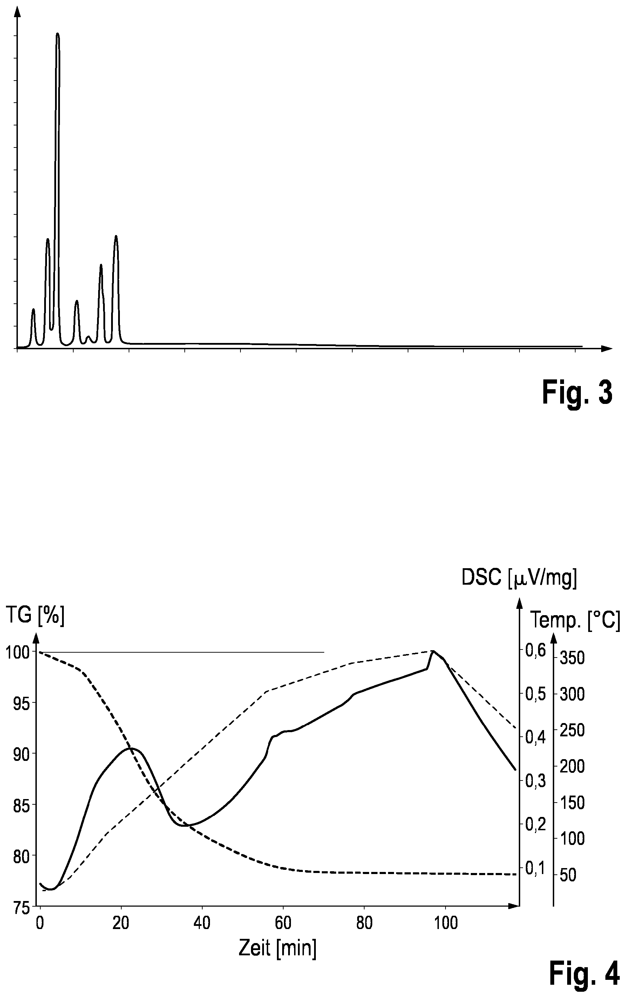

In Fig. 3 ist die EDX-Analyse von Zeolith (13X) Kugeln bedeckt mit 8,7 Gew.% PTFE gezeigt.

Fig. 4 zeigt die Thermogravimetrische Analyse (TGA - dicke gestrichelte Linie) und Differential-Scanning-Kalorimetrie (DSC - durchgezogene Linie) von PTFE-beschichtetem Zeolith im Temperaturbereich zwischen 25 und 350°C. Die linke Y-Achse stellt den Massenverlust in der Probe dar. Die rechte Y-Achse stellt das DSC-Ergebnis bzw. die Temperaturskala dar. Die dünne gestrichelte Linie stellt das Temperaturprofil dar. Die Untersuchung der thermischen Stabilität des PTFE-ummantelten Zeoliths zeigt einen Massenverlust im niedrigen Temperaturbereich durch Desorption von Wasser. Bei höheren Temperaturen bis 350 °C wird kein Massenverlust beobachtet. Diese Beobachtung bedeutet, dass es keine Zersetzung des Polymers bei hohen Temperaturen gibt.

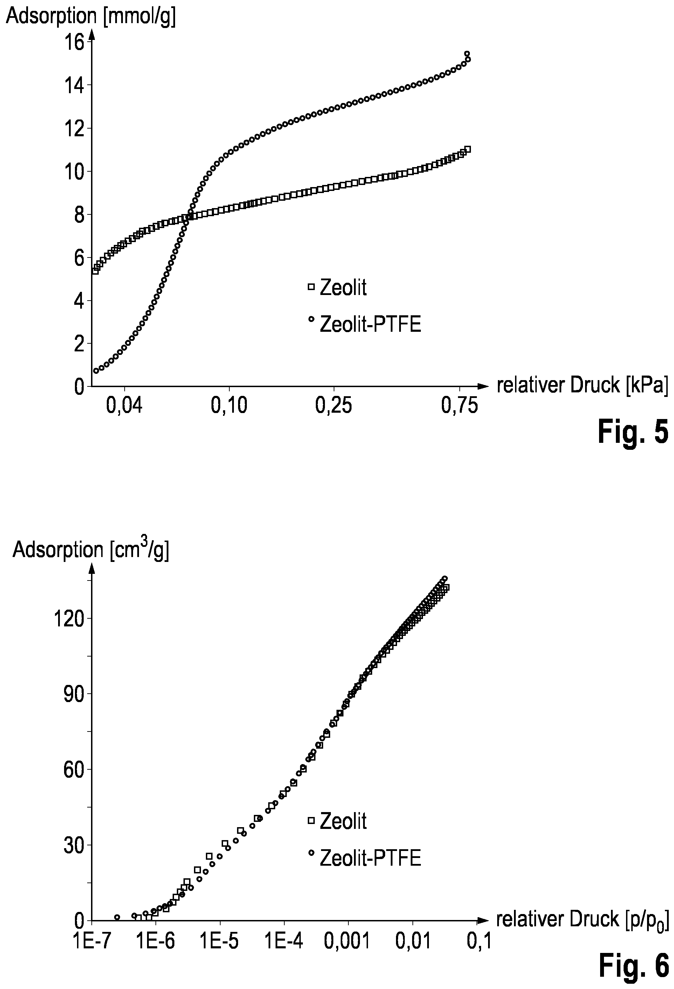

Fig. 5 zeigt die H₂O-Adsorptions-BET-Isotherme für unmodifizierten 13 X Zeolithen im Vergleich zu PFTE-modifizierten Zeolithen (2 Gew.% PTFE).

Fig. 6 zeigt die CO₂-Adsorptions-BET-Isotherme von unmodifizierten 13 X Zeolithen im Vergleich zu PFTE-modifizierten Zeolithen (2 Gew.% PTFE).

Die Modifikation von Zeolith mit PTFE führt zu einem signifikanten Verlust der Fähigkeit zur H₂O-Adsorption im Bereich niedriger Drücke (ca. 0,06 kPa), während die CO₂-Adsorption im gleichen Druckbereich nicht signifikant beeinträchtigt wird (siehe Fig. 5 und Fig. 6, CO₂- und H₂O-Adsorptionsisothermen). Dies führt zu einer erhöhten Selektivität für die CO₂-Adsorption in Gegenwart von Wasser.

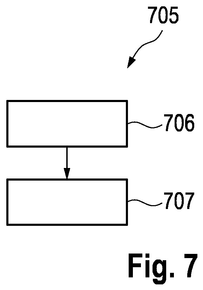

Fig. 7 stellt schematisch ein Ausführungsbeispiel eines erfindungsgemäßen Verfahrens zur Gewinnung von CO₂ 705 dar. Das Verfahren umfasst die Schritte:
- bereitstellen eines Polytetrafluorethylen-(PTFE)-beschichteten Adsorptionsmaterials 706,
- in Kontakt bringen einer CO₂-haltigen Gasmischung mit dem Polytetrafluorethylen-(PTFE)-beschichteten Adsorptionsmaterial 707 zur Adsorption von CO₂ in dem Polytetrafluorethylen-(PTFE)-beschichteten Adsorptionsmaterial.

### Beispiel:

Herstellung und Verwendung von PTFE-beschichteten Zeolithen als Sorbent für die Abscheidung von CO₂ aus der Atmosphärenluft, konkret ausgeführt durch die Hydrophobierung des Zeoliths (Typ 13 X) durch PTFE, wobei die Hydrophobierung in dem folgenden Verfahren erfolgt:
i) Zunächst wurde eine Suspension von Polytetrafluorethylen (PTFE) in Wasser (5 Gew.-% PTFE/H₂O) hergestellt. ( 2g von 2%ige PTFE-Lösung+ 2g Wasser)
ii) Pulver (oder Kugeln) des Zeoliths (1 g) wurde für mindestens 12 h im Vakuum-Trockenschrank bei 200 °C im Rundkolben getrocknet, um das adsorbierte Wasser oder Kohlendioxid zu entfernen.
iii) Der Zeolith (13X) wurde mit der PTFE-Dispersion imprägniert, dafür wurde das Gemisch 2 Stunden bei Raumtemperatur gerührt. Dabei erhitzt sich das Gemisch bei Zugabe der Dispersion und zu Beginn ist ein kurzes Aufschäumen zu beobachten.
iv) Der so modifizierte Zeolith wurde anschließend filtriert und zuerst bei Raumtemperatur, danach für 8 h bei 130 °C im Trockenschrank getrocknet.
v) Die Bedeckung der Zeolith-Partikel mit PTFE ist im vorliegenden Beispiel stark von der ausgewählten Beladung des PTFE abhängig. Die Bedeckung wurde durch Rasterelektronenmikroskopie (SEM) und energiedispersive Röntgenspektroskopie (EDX) Messungen bestätigt (siehe Fig. 2 und Fig. 3).

### Bezugszeichenliste

- 100: Verfahren zur Herstellung von Polytetrafluorethylen-(PTFE)-beschichteten Adsorptionsmaterialien
- 101: bereitstellen einer Suspension von PTFE in Wasser
- 102: bereitstellen von Zeolith
- 103: mischen der Suspension von PTFE mit dem Zeolithen zu einer Dispersion
- 104: trocknen der Dispersion
- 705: Verfahren zur Gewinnung von CO₂
- 706: bereitstellen eines Polytetrafluorethylen-(PTFE)-beschichteten Adsorptionsmaterials
- 707: in Kontakt bringen einer CO₂-haltigen Gasmischung mit dem Polytetrafluorethylen-(PTFE)-beschichteten Adsorptionsmaterial

## Patentansprüche

1. Verfahren zur Herstellung von Polytetrafluorethylen-(PTFE)-beschichteten Adsorptionsmaterialien, wobei das Verfahren die Schritte umfasst:
- bereitstellen einer Suspension von PTFE in Wasser,
- bereitstellen von Zeolith,
- mischen der Suspension von PTFE mit dem Zeolithen zu einer Dispersion,
- trocknen der Dispersion, um ein PTFE-beschichtetes Adsorptionsmaterial zu erhalten, wobei das PTFE in der Suspension in einem Bereich von 1 bis 20 Gew.% vorliegt, bezogen auf das Gewicht der Suspension.

2. Verfahren nach Anspruch 1, wobei das PTFE in der Suspension in einem Bereich von 5 bis 10 Gew.% vorliegt, bezogen auf das Gewicht der Suspension.

3. Verfahren nach Anspruch 1 oder 2, wobei der Zeolith ausgewählt ist aus der Gruppe bestehend aus 13X Zeolith, H-ZSM-5 und 5A.

4. Verfahren nach mindestens einem der Ansprüche 1 bis 3, wobei der Zeolith als Pulver, als Kugel, als Schrotkorn, oder als Pellet vorliegt.

5. Verfahren nach mindestens einem der Ansprüche 1 bis 4, wobei das Trocknen bei einer Temperatur im Bereich von 20 bis 180°C stattfindet.

6. Verfahren nach mindestens einem der Ansprüche 1 bis 5, ferner umfassend den Schritt:
- verpressen des PTFE-beschichteten Adsorptionsmaterial.

7. Polytetrafluorethylen-(PTFE)-beschichtetes Adsorptionsmaterial hergestellt nach mindestens einem der Ansprüche 1 bis 6.

8. Polytetrafluorethylen-(PTFE)-beschichtetes Adsorptionsmaterial nach Anspruch 7, wobei das PTFE in einem Bereich von 1 bis 20 Gew%, bezogen auf das Gesamtgewicht des Polytetrafluorethylen-(PTFE)-beschichteten Adsorptionsmaterials, vorliegt.

9. Polytetrafluorethylen-(PTFE)-beschichtetes Adsorptionsmaterial nach Anspruch 7 oder 8, wobei das Zeolith einen Durchmesser im Bereich von 2 bis 8 mm vorliegt.

10. Verwendung eines Polytetrafluorethylen-(PTFE)-beschichteten Adsorptionsmaterials nach mindestens einem der Ansprüche 7 bis 9 zur Adsorption von Kohlendioxid.

11. Verwendung nach Anspruch 10 in einem Direct Air Capture Verfahren.

12. Verwendung eines Polytetrafluorethylen-(PTFE)-beschichteten Adsorptionsmaterials nach mindestens einem der Ansprüche 7 bis 9 zur Adsorption von CO₂ in der chemischen Industrie, in der Erdölindustrie, oder bei Emittenten von CO₂.

13. Verfahren zur Gewinnung von Kohlendioxid, das Verfahren umfassend die Schritte:
- bereitstellen eines Polytetrafluorethylen-(PTFE)-beschichteten Adsorptionsmaterials nach mindestens einem der Ansprüche 7 bis 9,
- in Kontakt bringen einer CO₂-haltigen Gasmischung mit dem Polytetrafluorethylen-(PTFE)-beschichteten Adsorptionsmaterial zur Adsorption von CO₂ in dem Polytetrafluorethylen-(PTFE)-beschichteten Adsorptionsmaterial.

14. Verfahren nach Anspruch 13 ferner umfassend den Schritt:
- erwärmen des CO₂ adsorbierten Polytetrafluorethylen-(PTFE)-beschichteten Adsorptionsmaterials zur Freisetzung von CO₂.
